# EUROPEAN PATENT APPLICATION

(11) **EP 0 555 881 A2**
(43) Date of publication of application: **18.08.1993**
(21) Application number: 93102312.1
(22) Date of filing: 15.02.1993
(51) Int. Cl.: G06F 15/16

(54) **Office automation system wherein files in a database are available to electronic mail services**

(30) Priority: 13.02.1992 JP 59437/92
(71) Applicant: NEC CORPORATION, Tokyo (JP)
(72) Inventor: Sugaya, Masako, Minato-ku, Tokyo (JP)
(74) Representative: VOSSIUS & PARTNER

(57) **Abstract**

An office automation includes a plurality of terminals (14) and is provided with a database service and an electronic mail service. A file storage section (12) is arranged to store a plurality of files which are available to both the database service and the electronic mail service. A file management information storage section (21) stores file retrieval data required for retrieving the plurality of files from the file storage section. An electronic mail management information storage section (24) is arranged to store file dispatch data of files to be mailed. One of two controllers (18, 20) is operatively coupled to the terminals and the file storage section and the file management information storage section. The one (18) of the two controllers sets the file retrieval data in the file management information storage section, and retrieves a given file from the file storage section using the file retrieval data. The other controller (20) is operatively coupled to the terminals and the above mentioned two information storage sections. The other controller (20) stores the file dispatch data in response to a mail request inputted to the system via one of the terminals. The other controller (20) specifies a given portion of the file retrieval data using the file dispatch data and applying the given portion of the file retrieval data to the one (18) of the two controllers.

## Description

The present invention relates generally to an office automation system, and more specifically to such a system wherein a compilation of files maintained therein as a database are directly available to electronic mail services without the need for copying files within the system.

Office automation is the integration of essentially, if not all information functions in an office. Viz., functions such as word processing, data processing, electronic mail, etc.

The backbone of office automation is a local area network (LAN), which serves as a computer link or pathway between all users. With this type of linkage, users are able to create, store and retrieve information (message, data, etc) and transmit the same to any other user within the organization using an electronic mail service function.

A conventional office automation system, which exhibits database and electronic mail services, is provided with two independent file storage sections. That is, one of the file storage sections is dedicated to the database services and the other is dedicated to the electronic mail services.

Throughout the instant disclosure, the terms database services will be used in the sense of involving data processing of creating, modifying, and using a database.

The files created using the database services, are stored in the storage section dedicated to the database services. The files thus stored in a database can be used in common by all the users within the organization.

On the other hand, if a user wishes to mail a given file in the database to any other user, then the sender inputs the file name and the receiver's ID (Identification) to the office automation system. This system, in response to a file mailing request, copies the file to be mailed to the storage section assigned to the electronic mail services. Following this, the system lists the file name and the receiver's ID in an electronic mail management storage section The user to whom the mail is directed, accesses the system using one of the terminals in the system and retrieves the electronic mail from the storage section allotted to the mail services.

In brief, according to the above mentioned prior art, if a user of the system intends to mail a given file in the database, the system copies the file to the storage section which is assigned to the mail services.

Thus, the prior art has encountered the drawback in that the system operations are rendered complex due to the file copy requirement. Further, the prior art suffers from the problem in that an effective use of the memory in the system is not attained due to the need for two file storage sections both of which require a large capacity.

It is an object of the present invention to provide an office automation system which is provided with a single file storage section which can store a large number of files and which can be used as a common resource available to both the database services and electronic mail services.

Briefly, the object is fulfilled by an office automation which includes a plurality of terminals and is provided with a database service and an electronic mail service. A file storage section is arranged to store a plurality of files which are available to both the database service and the electronic mall service. A file management information storage section stores file retrieval data required for retrieving the plurality of files from the file storage section. An electronic mail management information storage section is arranged to store file dispatch data Of files to be mailed. One of the two controller is operatively coupled to the terminals and the file storage section and the file management information storage section. The one of the two controllers sets the file retrieval data in the file management information storage section, and retrieves a given file from the file storage section using the file retrieval data. The other controller is operatively coupled to the terminals and the above mentioned two information storage sections. The other controller stores the file dispatch data in response to a mail request inputted to the system via one of the terminals. The other controller specifies a given portion of the file retrieval data using the file dispatch data and applying the given portion of the file retrieval data to the one of the two controllers.

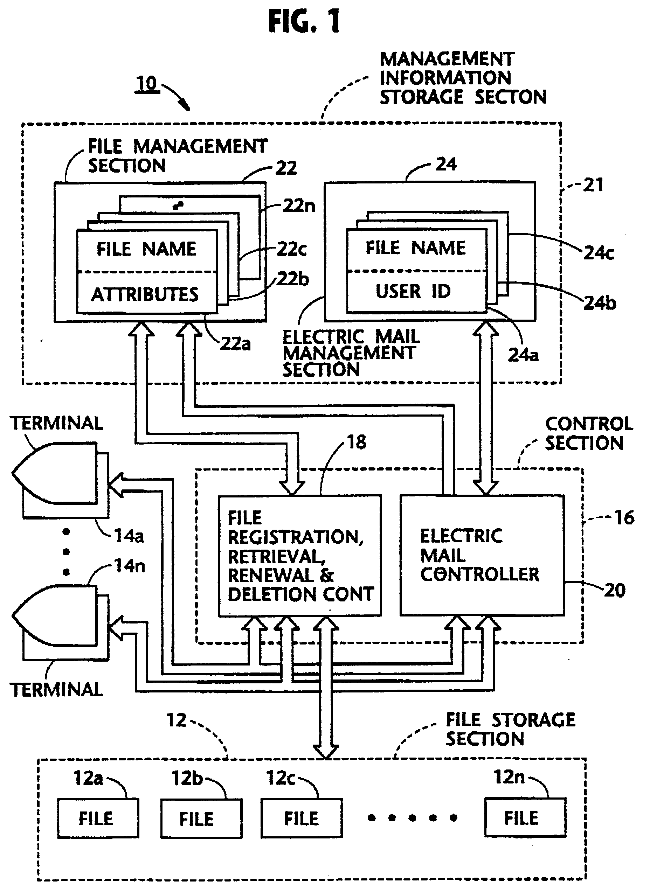

The features and advantages of the present invention will become more clearly appreciated from the following description taken in conjunction with the accompanying single drawing (Fig. 1) which is a block diagram which schematically illustrates an office automation system of the present invention.

Reference is now made to the single drawing, wherein a preferred embodiment of the present invention is schematically shown in block diagram form.

The blocks shown in the figure are configured in a conventional manner and thus details thereof are not illustrated for illustrative clarity.

The principle underlying the present invention is to provide a single file storage section in an office automation system. The single file storage section serves to store a plurality (viz., a large number) of files and thus acts as a common resource of the system which makes the files available to both the database and the electronic mail services.

As shown, an office automation system 10 includes only a single file storage section 12 which stores a plurality of files depicted by 12a, 12b, 12c, ..., 12n.

The system 10 further includes a plurality of terminals 14a, ..., 14n which are located on the premises of a company (for example) and which are operatively interconnected to a control section 16. Each of the terminals 14a, ..., 14n includes a display unit, a keyboard which allows entry and display of information, etc. as is well known in the art.

The control section 16 includes two controllers 18 and 20. The controller 18 supervises various file related operations (file registration, file retrieval, file renewal and file deletion). On the other hand, the controller 20 is for electronic mail services.

A management information storage section 21 comprises a file management section 22 and an electronic mail management section 24. The file management section 22 is coupled to the controllers 18 and 20, while the file management section 24 is coupled to the electronic mail controller 20.

The file management section 22 includes a plurality of storage portions 22a, 22b, 22c, ..., 22n each of which keeps the file name and the attributes thereof and which respectively correspond to the files 12a, 12b, 12c, ..., 12n held in the file storage section 12. Each file name of the storage portions 22a-22n specifies the corresponding file in the file storage section 12. The attributes stored in each of the storage portions 12a-12n includes a pointer (viz., an address) and a size of the corresponding file within the file storage section 12.

Further, the electronic mail management section 24 includes a plurality of storage portions which are under the control of the controller 20 and which stores a file name and a user ID every time when electronic mail is dispatched. Further reference to this feature will be made later.

The operations of the office automation system 10 will now be discussed.

For the sake of discussion it will be assumed that the file storage section 12 has already stored a plurality of files 12a-12n each of which is stored in the file storage section 12. It will be further assumed that any use of the system 10 is able to create, using one of the terminals 14a-14n, a document (or any other data) to be utilized as a common resource within the organization.

Upon the controller 18 receiving the document from one terminal, the controller 18 stores the document as a file in the file storage section 12 for reference at a later time. Simultaneously, the controller 18 sets or registers the file name and the attributes of the file 12a at one of the storage portions 22a-22n of the file management section 22.

The controller 18 also serves to renew and delete the files stored in the file storage section 12. In this case, the corresponding file names and the attributes in the file management section 22 are changed and deleted by the controller 18.

If one of the users of the system 10 wishes to send a file (for example, file 12a) to any other user of the system 10 using the electronic mail services, he or she operates one of the terminals 14a-14n and enters the file name and the receiving party's ID into the system 10. The controller 20 is responsive to the mail request and sets or registers the file name and the user ID at the storage portion 24a (for example) of the electronic mail management section 24.

Subsequently, if a user observes the arrival of the mail directed to him or her when inputting the user ID to the system 10 through one of the terminals 14a-14n, the user enters his or her password into the system 10. In response to the entry of the password, the controller 20 specifies the file name by referring to the user ID. Following this, the controller 20 searches for the file name and the attributes thereof in the file management section 22. Subsequently, the file name and the attributes stored in the section 22, upon being found, are applied to the controller 18. Thus, the controller 18 is able to access the file which is selected to be mailed and display same at the terminal which the mail receiver is now operating.

In the figure, the electronic mail management section 24 further stores other storage divisions 24b and 24c each of which contains a file name and a user ID (both not shown) of the mail. It is understood that these pieces of information are used in the same manner as mentioned above.

As discussed above, the present invention is provided with only one file storage section which keeps a plurality of files and therefore acts as common resources in a manner as to be available to both the database and electronic mail services. Accordingly, there is no need for copying a file or files to be mailed, from the database storage section to the mail file storage section as mentioned in connection with the prior art.

It will be understood that the above disclosure is representative of only one possible embodiment of the present invention and that the concept on which the invention is based is not specifically limited thereto.

## Claims

1. An office automation system which includes a plurality of terminals and which is provided with a database service and an electronic mail service, comprising:
file storage means for storing a plurality of files which are available to both said database service and said electronic mail service;
first information storage means for storing file retrieval data required for retrieving said plurality of files from said file storage means;
second information storage means for storing file dispatch data of files to be mailed;
a first controller operatively coupled to said plurality of terminals and said file storage means and said first information storage means, said first controller setting said file retrieval data in said first information storage means, said first controller retrieving a given file from said file storage means using said file retrieval data;
a second controller operatively coupled to said plurality of terminals and said first and second information storage means, said second controller storing said file dispatch data in response to a mail request inputted to said office automation system via one of said plurality of terminals, said second controller specifying a given portion of said file retrieval data using said file dispatch data and applying said given portion of said file retrieval data to said first controller.

2. An office automation system as claimed in claim 1, wherein said file retrieval data includes file names of said plurality of files stored in said file storage section, each of said file names being accompanied by file attribute data.

3. An office automation system as claimed in claim 1 or 2,wherein said file dispatch data includes a file name of the file to be mailed, and an associated user ID.
